# EUROPEAN PATENT APPLICATION

(11) **EP 4 491 272 A1**
(43) Date of publication of application: **15.01.2025**
(21) Application number: 23767159.9
(22) Date of filing: 08.03.2023
(51) Int. Cl.: B01L 3/00, G01N 35/10

(54) **VIAL CONTAINER AND TEST CARTRIDGE COMPRISING SAME**

(30) Priority: 08.03.2022 KR 20220029388
(71) Applicant: Ugenecell Inc., Seoul 05557 (KR); Boditech Med Inc., Chuncheon-si, Gangwon-do 24398 (KR)
(72) Inventor: WON, Byoung Yeon, Seoul 06995 (KR); RYU, Seung Hwan, Chuncheon-si Gangwon-do 24377 (KR); IM, Youn Tae, Chuncheon-si Gangwon-do 24401 (KR); CHOI, Kwang Won, Chuncheon-si Gangwon-do 24209 (KR); KIM, Byeong Chul, Chuncheon-si Gangwon-do 24303 (KR)
(74) Representative: Eisenführ Speiser
(86) International application number: PCT/KR2023/003158
(87) International publication number: WO 2023/172058

(57) **Abstract**

A vial container, according to one embodiment of the present invention, comprises a container body in which a solution is accommodated; and a container lid detachably coupled to the top of the container body and having a plurality of lid ventilation holes, wherein the container body comprises a solution accommodation portion in which the solution is accommodated, a punching layer closing the bottom of the solution accommodation portion, a residue accommodating groove disposed to surround the periphery of the punching layer, and an entry groove portion provided to face the solution accommodation portion with the punching layer interposed therebetween.

## Description

### [Technical Field]

The present invention relates to a vial container and a test cartridge including the same, and more particularly, to a vial container and a test cartridge that prevent shaking of the vial container and allow a solution stored in the vial container to flow to each chamber in which a test reagent is accommodated.

### [Background Art]

Generally, with the development of medicine and various related technologies, substances such as blood cells, nucleic acids, proteins, and antigens included in predetermined biological samples such as blood are being tested. After the samples described above are collected, changes that occur after reacting the collected samples with predetermined reagents are analyzed and observed, and thus the presence or absence, the proportion, and the amount of various substances included in the samples may be tested. Accordingly, information on the presence or absence of a disease, the condition of the disease, or the like may be obtained.

In this sample testing process, a state in which the samples and reagents used to test the sample are not affected by external factors and a state in which the correct amount is used each time are very important to obtain reproducible and accurate results. In the testing process, since the samples and the reagents may be exposed to the outside, it is necessary to effectively prevent contamination caused by the exposure of the samples and the reagents and ensure accuracy of the test using a correct amount.

Further, after the reaction of the reagents and the samples, tests for detecting and reading/analyzing reaction products are accurately and quickly performed under one integrated system. Thus, it is necessary to reduce a testing time and testing costs and it is also necessary to reduce operations included in and costs consumed throughout the test.

### [Disclosure]

### [Technical Problem]

The present invention is directed to providing a vial container capable of preventing shaking of the vial container and allowing a solution to evenly flow to chambers in which test reagents are accommodated, when the solution stored in the vial container flows to the chambers, and a test cartridge including the same.

The present invention is also directed to providing a vial container provided with a residue accommodating groove, on which foreign substances are settled, to prevent flow of the foreign substances to chambers, and a test cartridge including the same.

The present invention is also directed to providing a vial container of which a container lid is provided with a lid ventilation hole and which allows a solution to flow to a test cartridge without power by the gravity when a punching layer is punched while the vial container is coupled to the test cartridge.

The present invention is also directed to providing a vial container of which a lower end is manufactured in a funnel structure, so that flow of a solution may be guided in the direction of gravity and the solution may smoothly flow from the vial container to a reagent reaction unit.

### [Technical Solution]

To solve the above problems, a vial container according to an embodiment of the present invention includes a container body in which a solution is accommodated, and a container lid detachably coupled to an upper portion of the container body and provided with a plurality of lid ventilation holes.

Further, the container body includes a solution accommodating portion in which the solution is accommodated, a punching layer that closes a lower portion of the solution accommodating portion, a residue accommodating groove disposed to surround an edge of the punching layer, and an entry groove portion provided to face the solution accommodating portion with the punching layer interposed therebetween.

Further, the container body may include a bottom portion in which the entry groove portion is provided and which has a diameter greater than a diameter of a lower end of the solution accommodating portion, a plurality of ribs provided on an outer circumferential surface of the solution accommodating portion to be spaced apart from the bottom portion, and a mounting groove provided in a circumferential direction of the lower end of the solution accommodating portion between the plurality of ribs and the bottom portion.

Further, in the container body, the bottom portion, the plurality of ribs, and the mounting groove may be integrally formed.

Further, in the container body, a guide groove surrounding an outer circumferential surface of the entry groove portion may be provided in the bottom portion.

Further, the plurality of ribs may be provided to be spaced apart from each other in a circumferential direction of the solution accommodating portion.

Further, the container lid may include an air-permeable membrane covering the plurality of lid ventilation holes on an inner surface thereof.

Further, a diameter of the solution accommodating portion may be decreased toward a lower end thereof.

Further, the residue accommodating groove may protrude downward from the solution accommodating portion and be stepped with respect to the punching layer.

Further, a test cartridge according to an embodiment of the present invention includes the above-described vial container, a solution distributing unit provided with an inlet passing through a punching layer of the vial container, a reagent reaction unit provided with a plurality of chambers in which test reagents are accommodated, and a container mounting part that is provided with a container insertion space into which the vial container is inserted and a hook provided in the container insertion space and caught by a mounting groove of the vial container and is fitted in the test cartridge so that the inlet is positioned in the container insertion space.

Further, when the vial container is inserted into the container insertion space, the container mounting part may support a side surface of the vial container while the hook is caught by the mounting groove.

Further, the inlet may have an upper end having a sharp tip portion and have an inlet passage vertically passing through the tip portion.

Further, the inlet may be provided with an inlet guide groove at the tip portion.

Further, the inlet guide groove may guide flow of the solution from a lower end of the vial container to the inlet passage.

### [Advantageous Effects]

As described above, a vial container and a test cartridge including the same related to an embodiment of the present invention have the following effects.

When a solution stored in the vial container flows to chambers in which test reagents are accommodated, shaking of the vial container can be prevented, and the solution can evenly flow to the chambers.

Further, a residue accommodating groove in which foreign substances are settled is provided in a vial container, and thus the foreign substances can be prevented from flowing to a chamber, and accuracy of a test of a specimen can be improved.

Further, a lid ventilation hole is provided in a container lid of a vial container, and thus when a punching layer is punched while the vial container is coupled to a test cartridge, a solution can flow to the test cartridge without power due to the gravity.

Further, a lower end of a vial container is manufactured in a funnel structure, and thus flow of a solution can be guided in the direction of gravity, and the solution can smoothly flow from the vial container to a reagent reaction unit.

### [Description of Drawings]

FIG. 1 is a schematic view illustrating an installation state of a test cartridge installed in a specimen testing device in an embodiment of the present invention.
FIGS. 2 to 4 are views for describing a vial container according to the embodiment of the present invention.
FIG. 5 is a schematic perspective view illustrating the test cartridge according to the embodiment of the present invention.
FIG. 6 is a schematic cross-sectional view illustrating the test cartridge according to the embodiment of the present invention.
FIG. 7 is a schematic exploded perspective view illustrating the test cartridge according to the embodiment of the present invention.
FIG. 8 is a schematic view illustrating a coupling state of a heating unit, a reagent reaction unit, a gasket member, and a solution distributing unit when viewed from the front side in a state in which a container mounting unit is removed from the test cartridge according to the embodiment of the present invention.
FIG. 9 is a schematic view illustrating a coupling state of the reagent reaction unit, the gasket member, and the solution distributing unit when viewed from the rear side in the embodiment of the present invention.
FIG. 10 is a schematic rear view illustrating the reagent reaction unit according to the embodiment of the present invention.
FIGS. 11 and 12 are schematic views illustrating a structure of the solution distributing unit according to the embodiment of the present invention.
FIG. 13 is a view for describing a process of providing a solution to each chamber in the embodiment of the present invention.

### [Modes of the Invention]

The present invention may be modified in various changes and may have various embodiments, and thus specific embodiments will be illustrated and described in the accompanying drawings.

However, it should be understood that the present invention is not limited to the specific embodiments and includes all changes, equivalents, and substitutions included in the spirit and scope of the present invention. In description of the present invention, when it is determined that the detailed description of widely known related technologies may make the subject matter of the present invention unclear, the detailed description will be omitted.

Terms such as first and second may be used to describe various components, but the components should not be limited by the terms. The terms are used only for the purpose of distinguishing one component from another component.

Terms used in the present invention are used only to describe specific embodiments and are not intended to limit the present invention. Singular expressions include plural expressions unless clearly otherwise indicated in the context.

It should be understood in the present invention that terms such as "include" and "have" are intended to indicate the presence of features, numbers, steps, operations, components, parts, or combinations thereof described in the specification and do not exclude in advance the possibility of the presence or addition of one or more other features, numbers, steps, operations, components, parts, or combinations thereof.

Thus, since a configuration illustrated in embodiments described herein is merely one of most preferred embodiments of the present invention and does not represent the entire technical spirit of the present invention, there may be various equivalents and modifications that may replace the embodiments at a time of the present invention.

Further, it should be understood that, in the present invention, the accompanying drawings are illustrated in an enlarged manner or a reduced manner for convenience of description.

Hereinafter, a vial container and a test cartridge including the same according to the invention will be described in detail with reference to the accompanying drawings. However, the accompanying drawings are illustrative, and the scope of the vial container and the test cartridge of the present invention is not limited by the accompanying drawings.

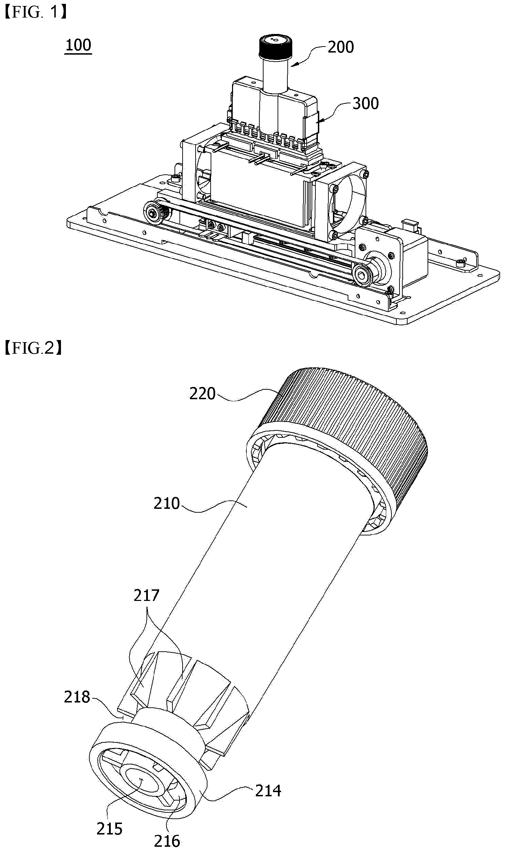

As illustrated in FIG. 1, a specimen testing device 100 according to an embodiment of the present invention includes a vial container 200 and a test cartridge 300. The specimen testing device 100 is a device that tests reaction of a specimen according to different types of test reagents.

The vial container 200 is coupled to the test cartridge 300. A solution in which the specimen is mixed is stored in the vial container 200. A lysis solution is a solution for bursting cells, viruses, or the like to extract nucleic acids.

Referring to FIGS. 2 to 4, the vial container 200 according to the embodiment of the present invention includes a container body 210 and a container lid 220. In detail, the vial container 200 includes the container body 210 in which the solution is accommodated and a container lid 220 detachably coupled to an upper portion of the container body 210 and provided with a plurality of lid ventilation holes.

Further, the container body 210 may include a solution accommodating portion 211 in which the solution is accommodated, a punching layer 213 that closes a lower portion of the solution accommodating portion 211, a residue accommodating groove 212 disposed to surround an edge of the punching layer 213, and an entry groove portion 215 provided to face the solution accommodating portion 211 with the punching layer 213 interposed therebetween.

The solution is accommodated in the container body 210. Here, the solution is a solution in which the collected specimen is diluted. The container body 210 is obtained by integrally injection-molding the solution accommodating portion 211, the residue accommodating groove 212, the punching layer 213, the entry groove portion 215, a guide groove 216, and a plurality of ribs 217.

Here, the solution accommodating portion 211 refers to a portion in which the solution is accommodated. An upper portion of the solution accommodating portion 211 is open, and a lower portion thereof part is closed by the punching layer 213. The punching layer 213 is a thin film and provided to pass by an inlet 332 of the test cartridge 300, which will be described below.

The solution accommodating portion 211 may have a cylindrical structure with an overall hollow interior. The solution accommodating portion 211 may be provided to have a diameter that decreases toward a lower end thereof, and for example, the lower end 211a may be provided in a funnel structure. As the lower end 211a of the solution accommodating portion 211 has a funnel structure, the solution easily flows in a direction of gravity during punching of the punching layer 213.

The residue accommodating groove 212 is provided at the lower end 211a of the solution accommodating portion 211. The residue accommodating groove 212 may be arranged to protrude from the lower portion of the solution accommodating portion 211 and surround the edge of the punching layer 213. Further, the residue accommodating groove 212 is provided to be stepped with respect to the punching layer 213.

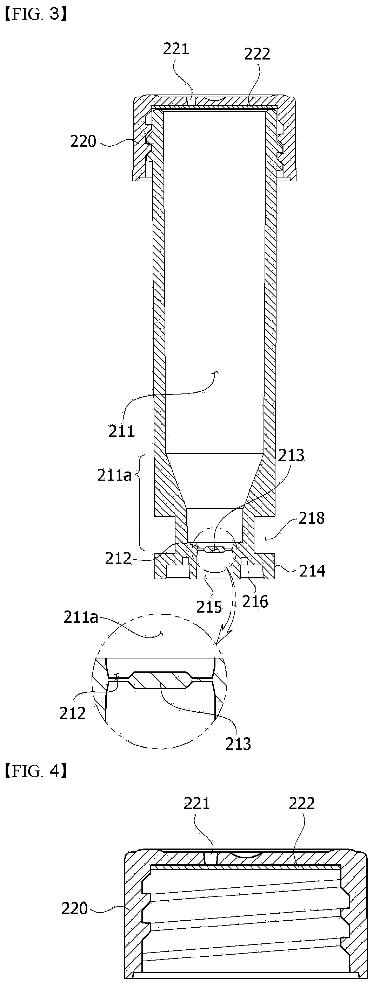

Referring to FIG. 3, the residue accommodating groove 212 is a space in which foreign substances brought during specimen collection are settled. That is, a bottom surface of the residue accommodating groove 212 may be positioned under the punching layer 213, and accordingly, foreign substances are settled by the gravity. That is, the foreign substances mixed in the solution are settled into the residue accommodating groove 212, and only the solution mixed with the specimen may flow into a chamber through the inlet 332.

The vial container 200 according to the present embodiment may be provided with the residue accommodating groove 212 provided at the lower end 211a of the solution accommodating portion 211, thereby preventing foreign substances from flowing into the test cartridge 300 together with the solution.

The entry groove portion 215 is provided to face the solution accommodating portion 211 with the punching layer 213 interposed therebetween. The entry groove portion 215 is a portion into which the inlet 332 of the test cartridge 300, which will be described below, is inserted. The entry groove portion 215 is provided in a bottom portion 214.

The container body 210 may include the bottom portion 214 in which the entry groove portion 215 is provided and which has a diameter greater than a diameter of the lower end 221a of the solution accommodating portion 211, the plurality of ribs 217 spaced apart from the bottom portion 214 and provided on an outer circumferential surface of the solution accommodating portion 211, and a mounting groove 218 provided in a circumferential direction of the lower end 211a of the solution accommodating portion 211 between the plurality of ribs 217 and the bottom portion 214.

The bottom portion 214 is connected to the lower end 211a of the solution accommodating portion 211. The bottom portion 214 has a diameter that is greater than a diameter of the lower end 211a of the solution accommodating portion 211. The bottom portion 214 is provided so that the container body 210 may be erected therefrom. The entry groove portion 215 and the guide groove 216 are provided at the bottom portion 214.

The guide groove 216 may be provided on the bottom portion 214 of the container body 210 to surround an outer circumferential surface of the entry groove portion 215. The plurality of guide grooves 216 may be provided in the bottom portion 214 of the container body 210 along a circumferential direction with the entry groove portion 215 as a center.

The guide groove 216 decreases a thickness of the entry groove portion 215 and thus provides structural elasticity to the entry groove portion 215 in a lateral direction. When the inlet 332 passes through the punching layer 213 and is inserted into the solution accommodating portion 211, the inlet 332 is press-fitted into the entry groove portion 215 to prevent leakage of the solution.

According to this structure, the guide groove 216 is provided in the bottom portion 214, and when the inlet 332 is inserted into the entry groove portion 215, the press-fitting force may be decreased, and an inner surface of the entry groove portion 215 may come into close contact with an outer surface of the inlet 332. Further, even after the inlet 332 is inserted into the entry groove portion 215, the leakage of the solution can be prevented.

The mounting groove 218 is provided between the plurality of ribs 217 and the bottom portion 214 in the circumferential direction of the lower end 211a of the solution accommodating portion 211. The mounting groove 218 is a portion by which a hook 355 of a container mounting part 350, which will be described below, is caught.

The plurality of ribs 217 may be provided to be spaced apart from each other in the circumferential direction of the solution accommodating portion 211. The plurality of ribs 217 are provided to be spaced apart from the bottom portion 214 and protrude from the outer circumferential surface of the solution accommodating portion 211. The plurality of ribs 217 are positioned on an inclined surface of a funnel-shaped upper portion of the solution accommodating portion 211 to be spaced apart from each other in the circumferential direction of the solution accommodating portion 211.

In detail, the plurality of ribs 217 may be formed in a plate shape having a triangular cross section, and an inclined surface of the rib 217 may be provided in contact with the inclined surface of the funnel-shaped upper portion of the solution accommodating portion 211.

When the vial container 200 is inserted into the container mounting part 350, the plurality of ribs 217 may be of a wing type, and the hook 355 may be caught by the ribs 217, and when the vial container 200 is rotated by a predetermined angle, the hook 355 may be separated from the ribs 217, and the vial container 200 may be easily separated from the container mounting part 350.

Referring to FIGS. 3 and 4, the container lid 220 is detachably coupled to the upper portion of the container body 210. The container lid 220 is provided with a plurality of lid ventilation holes 221. Air flows into the solution accommodating portion 211 due to the lid ventilation holes 221.

That is, the solution accommodating portion 211 is in an atmospheric pressure due to the lid ventilation holes 221. Accordingly, when the punching layer 213 is punched, the solution flows in the direction of gravity even without a separate driving device.

Referring to FIG. 4, an air-permeable membrane 222 is installed on an inner surface of the container lid 220. Here, the air-permeable membrane 222 has an air-permeable material. The air-permeable membrane 222 is installed on the inner surface of the container lid 220 to cover the plurality of lid ventilation holes 221.

In this way, as the lid ventilation holes are provided on the container lid of the vial container, when the punching layer is punched while the vial container is coupled to the test cartridge, the solution may flow to the test cartridge without power due to the gravity.

The test cartridge 300 related to the embodiment of the present invention includes the vial container 200, the solution distributing unit 330 provided with the inlet passing through the punching layer of the vial container, the reagent reaction unit 310 having at least one chamber in which a test reagent is accommodated, and the container mounting part 350 that is provided with a container insertion space into which the vial container is inserted and a hook provided in the container insertion space and caught by the mounting groove of the vial container and is fitted in the test cartridge so that the inlet is positioned in the container insertion space.

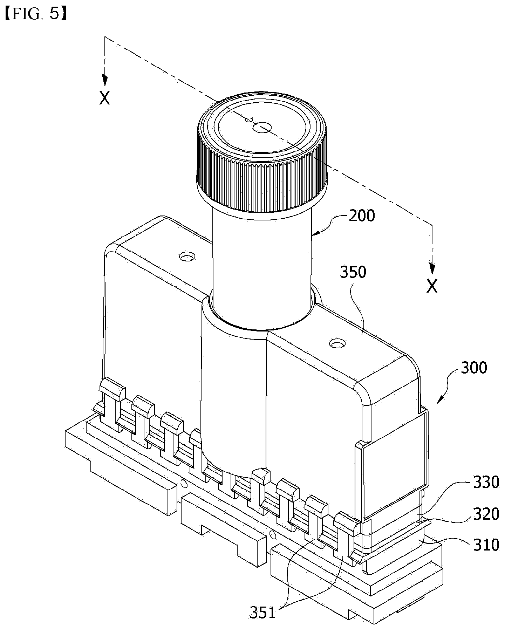

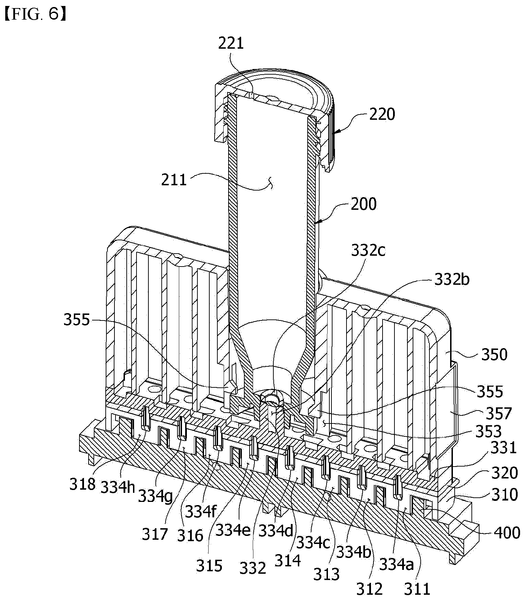

Referring to FIGS. 5 to 7, the test cartridge 300 related to the embodiment of the present invention includes the reagent reaction unit 310, a gasket member 320, the solution distributing unit 330, a filter member 340, and the container mounting part 350. The reagent reaction unit 310, the gasket member 320, solution distributing unit 330, the filter member 340, and the container mounting part 350 are sequentially stacked vertically.

The vial container 200 is coupled to the test cartridge 300. Here, the vial container 200 is a container in which the solution mixed with the specimen is accommodated.

When the vial container 200 inserted into the container mounting part 350 is punched by the inlet 332 of the solution distributing unit 330, the solution flows downward from the vial container 200 through the inlet 332 to a channel portion 333 of the solution distributing unit 330, flows downward to each of chambers 311 to 318 along guide pins 334a to 334h provided in the channel portion 333, and is then stored in each of the chambers 311 to 318.

The reagent reaction unit 310 includes the plurality of chambers 311 to 318. The plurality of chambers 311 to 318 are spaced apart from each other in a row. Here, different test reagents 10 are accommodated in each of the chambers 311 to 318. The chamber is a space in which the reaction of the specimen with respect to the test reagent 10 is performed.

The reagent reaction unit 310 is provided with a plurality of upper fitting grooves 319a at an upper edge thereof, which are fitted into a plurality of upper fitting protrusions of a distribution plate 331.

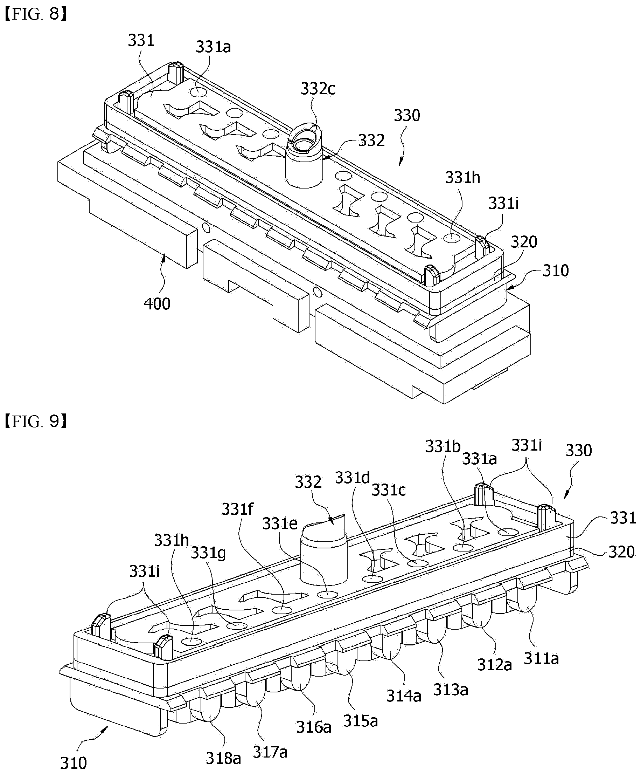

Referring to FIG. 9, the reagent reaction unit 310 is provided with a plurality of side fitting grooves 319b spaced apart from each other in a longitudinal direction on both sides thereof, and the plurality of side fitting grooves 319b are provided to be offset from the arrangement of the plurality of chambers 311 to 318. Here, the side fitting groove 319b is a groove to which a fitting protrusion 351 of the container mounting part 350 is coupled.

In the present embodiment, for convenience of description, the plurality of chambers 311 to 318 will be individually referred to as a "first chamber 311 to an eighth chamber 318." However, the number of chambers may be changed and is not limited to the specification and the drawing.

Light source input portions 311a to 318a protruding laterally are provided in the chambers 311 to 318.

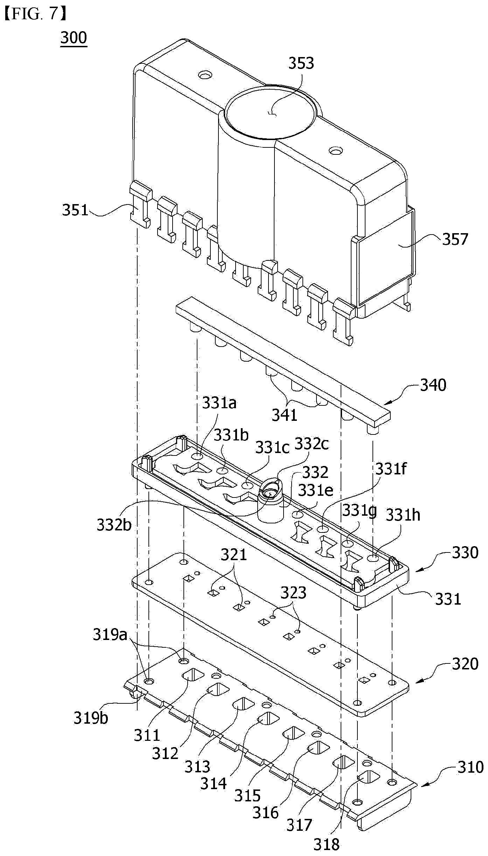

Referring to FIGS. 7 and 8, the gasket member 320, the solution distributing unit 330, and the filter member 340 are sequentially stacked between the reagent reaction unit 310 and the container mounting part 350.

The gasket member 320 is disposed on the reagent reaction unit 310 to cover the chambers 311 to 318. In this case, it is preferable that the gasket member 320 be installed in the reagent reaction unit 310 so as not to limit flow of the solution to the chambers 311 to 318.

To this end, the gasket member 320 is provided with a plurality of pinholes 321 and a plurality of gasket air holes 323 in an arrangement direction of the plurality of chambers 311 to 318.

Here, the plurality of pinholes 321 are holes through which the guide pins 334a to 334h pass, respectively. The pinholes 321 have a larger cross-sectional area that that of the guide pins 334a to 334h.

The gasket air hole 323 is a hole through which air passes. The plurality of gasket air holes 323 are provided to correspond to air holes 335a to 335h, respectively. The gasket air holes 323 are provided to communicate with the chambers 311 to 318, respectively. The gasket air holes 323 are provided coaxially with the air holes 335a to 335h and air grooves 331a to 331h, respectively, to form an air flow path.

Referring to FIGS. 8, 9, 11, and 12, the solution distributing unit 330 includes the distribution plate 331, the inlet 332, the channel portion 333, the plurality of guide pins 334a to 334h, and the plurality of air holes 335a to 335h.

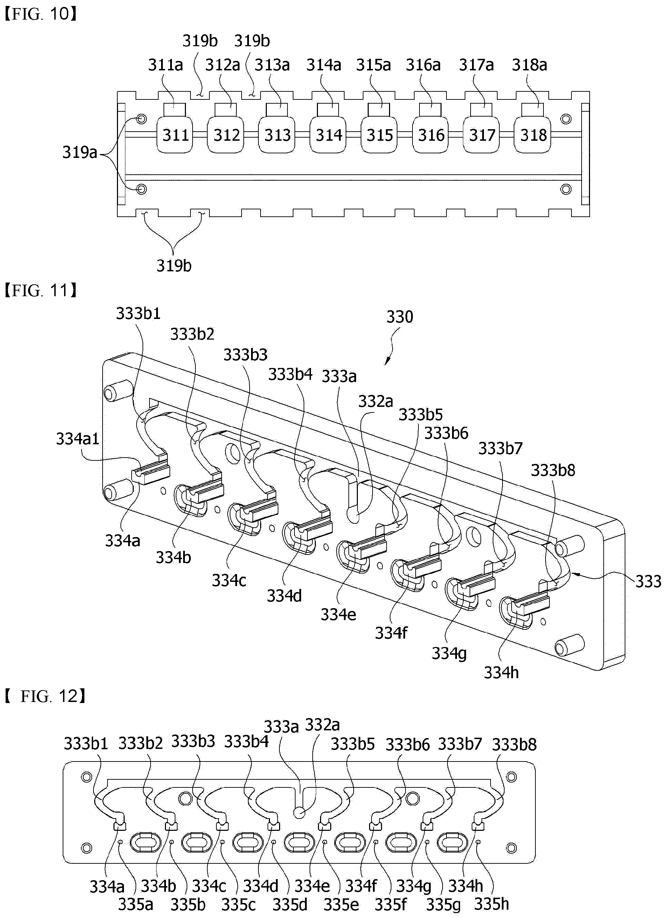

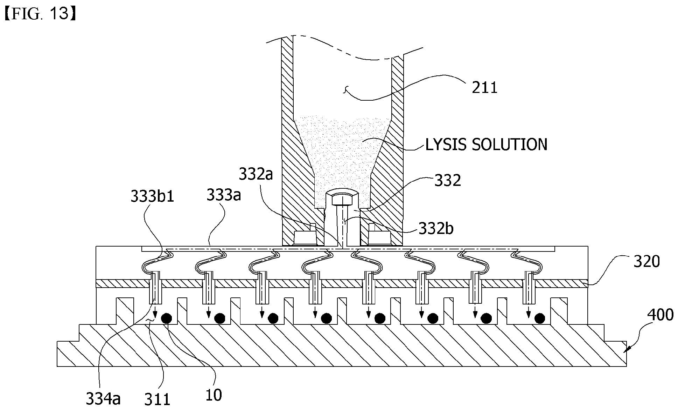

Referring to FIGS. 10 and 13, the solution distributing unit 330 is inserted into the vial container 200 through a lower end of the vial container 200. The solution distributing unit 330 receives the solution and distributes the solution to the chambers 311 to 318. The solution distributing unit 330 is stacked on and coupled to the reagent reaction unit 310 so that the guide pins 334a to 334h are inserted into the chambers 311 to 318, respectively, and the air holes 335a to 335h are connected to the chambers 311 to 318, respectively.

The distribution plate 331 has a specification corresponding to the reagent reaction unit 310. The distribution plate 331 is provided with an inlet hole 332a vertically passing through a center thereof. The inlet 332 is provided in an upper surface of the distribution plate 331, and the channel portion 333 and the plurality of guide pins 334a to 334h are provided on a lower surface thereof.

Referring to FIGS. 8 and 9, the distribution plate 331 is provided with a plurality of upper fitting protrusions 331i protruding from an edge of the upper surface thereof toward an upper side of the distribution plate 331. An upper portion of the distribution plate 331 is fitted into the container mounting part 350 by the upper fitting protrusion 331i.

Referring to FIGS. 11 and 12, the distribution plate 331 is provided with a plurality of lower fitting protrusions (not illustrated) protruding from an edge of the lower surface thereof toward a lower side of the distribution plate 331. The lower portion of the distribution plate 331 is fitted into the reagent reaction unit 310 by the lower fitting protrusion.

The inlet 332 is provided to be coaxially with the inlet hole 332a and to vertically protrude from the upper portion of the distribution plate 331. The inlet 332 is provided to be inserted into the vial container 200.

An upper end of the inlet 332 has a sharp tip portion. Further, the inlet 332 has a hollow interior.

The inlet 332 is provided with an inlet passage 332b and an inlet guide groove 332c. The inlet passage 332b vertically passes through the tip portion coaxially with a center of the inlet hole 332a. The inlet passage 332b is a passage through which the solution flows from the vial container 200 to the channel portion 333.

The inlet guide groove 332c may be provided at the tip portion provided in the inlet 332. The inlet guide groove 332c guides the flow of the solution to the inlet passage 332b. That is, due to the inlet guide groove 332c, the solution flows the inlet passage 332b along the inlet guide groove 332c provided in a narrow width at the tip portion rather than the entire area of the tip portion of the inlet 332.

The channel portion 333 is provided on a lower surface of the distribution plate 331. The channel portion 333 guides the flow of the solution flowing into the inlet hole 332a.

The channel portion 333 includes a reference channel 333a and a plurality of branch channels 333b1 to 333b8. Here, the reference channel 333a has a grove structure connected to the inlet hole 332a on the lower surface of the distribution plate 331. The plurality of branch channels 333b1 to 333b8 have a groove structure that branches from the reference channel 333a into several branches.

Referring to FIGS. 11 to 13, a plurality of branch channels 333b1 to 333b8 branch from the reference channel 333a to be left-right symmetric to the inlet hole 332a. The plurality of branch channels 333b1 to 333b8 are provided to be curved with a predetermined curvature in a direction away from the inlet hole 332a. Alternatively, the branch channels 333b1 to 333b8 may have an L-shaped structure that is gently bent in a direction away from the inlet hole 332a.

In the document, the plurality of branch channels 333b1 to 333b8 are individually referred to as the "first branch channel 333b1 to the eighth branch channel 333b8."

The plurality of guide pins 334a to 334h are provided to protrude vertically from distal ends of the branch channels 333b1 to 333b8 to the lower portion of the distribution plate 331 to correspond to the arrangement of the plurality of chambers 311 to 318.

The guide pins 334a to 334h may have pin grooves 334a-1 formed in a longitudinal direction of the guide pins on surfaces thereof connected to the branch channels 333b1 to 333b8. The guide pins guide flow of the solution flowing along the branch channels 333b1 to 333b8.

In the present embodiment, for convenience of description, the plurality of guide pins 334a to 334h are individually referred to as the "first guide pin 334a to the eighth guide pin 334h." The first guide pin 334a to the eighth guide pin 334h may have the same structure.

Here, the first guide pin 334a is provided to protrude from a distal end of the first branch channel 333b1 to the lower surface of the distribution plate 331. Referring to FIGS. 12 and 13, the first guide pin 334a is inserted into the first chamber 311 to guide flow of the solution into the first chamber 311. In this case, the solution flows downward into the chamber 311 along the pin groove 334a-1 provided in the first guide pin 334a.

The second guide pin 334b is provided to protrude from a distal end of the second branch channel 333b2 to the lower surface of the distribution plate 331. The second guide pin 334b is inserted into the second chamber 312 and guides flow of the solution into the second chamber 312.

The third guide pin 334c is provided to protrude from a distal end of the third branch channel 333b3 to the lower surface of the distribution plate 331. The third guide pin 334c is inserted into the third chamber 313 and guides flow of the solution into the third chamber 313.

The fourth guide pin 334d is provided to protrude from a distal end of the fourth branch channel 333b4 to the lower surface of the distribution plate 331. The fourth guide pin 334d is inserted into the fourth chamber 314 and guides flow of the solution into the fourth chamber 314.

The fifth guide pin 334e is provided to protrude from a distal end of the fifth branch channel 333b5 to the lower surface of the distribution plate 331. The fifth guide pin 334e is inserted into the fifth chamber 315 and guides flow of the solution into the fifth chamber 315.

The sixth guide pin 334f is provided to protrude from a distal end of the sixth branch channel 333b6 to the lower surface of the distribution plate 331. The sixth guide pin 334f is inserted into the sixth chamber 316 and guides flow of the solution into the sixth chamber 316.

The seventh guide pin 334g is provided to protrude from a distal end of the seventh branch channel 333b7 to the lower surface of the distribution plate 331. The seventh guide pin 334g is inserted into the seventh chamber 317 and guides flow of the solution into the seventh chamber 317.

The eighth guide pin 334h is provided to protrude from a distal end of the eighth branch channel 333b8 to the lower surface of the distribution plate 331. The eighth guide pin 334h is inserted into the eighth chamber 318 and guides flow of the solution into the eighth chamber 318.

The plurality of air holes 335a to 335h are provided to vertically pass through the distribution plate 331 and to correspond to the arrangement of the guide pins 334a to 334h. The air holes 335a to 335h are provided on a side opposite to one surface, on which the pin groove 334a-1 is provided, to be spaced apart from the distal ends of the branch channels 333b1 to 333b8 with the guide pins 334a to 334h interposed therebetween.

In the present embodiment, for convenience of description, the plurality of air holes are individually referred to as the "first air hole 335a to the eighth air hole 335h."

The first air hole 335a to the eighth air hole 335h arranged in a row are parallel to the first guide pin 334a to the eighth guide pin 334h.

The first air hole 335a is positioned on a straight line with respect to the first guide pin 334a. Likewise, the second air hole 335b to the eighth air hole 335h are respectively positioned on straight lines with respect to the second guide pin 334b to the eighth guide pin 334h.

Here, the first air hole 335a communicates with the first chamber 311 and guides flow of the air into the first chamber 311. The first air hole 335a is disposed on a side opposite to the pin groove 334a-1 to be spaced apart from the first guide pin 334a.

The second air hole 335b communicates with the second chamber 312 and guides flow of the air into the second chamber 312. The third air hole 335c communicates with the third chamber 313 and guides flow of the air into the third chamber 313. The fourth air hole 335d communicates with the fourth chamber 314 and guides flow of the air into the fourth chamber 314.

The fifth air hole 335e communicates with the fifth chamber 315 and guides flow of the air into the fifth chamber 315. The sixth air hole 335f communicates with the sixth chamber 316 and guides flow of the air into the sixth chamber 316.

The seventh air hole 335g communicates with the seventh chamber 317 and guides flow of the air into the seventh chamber 317. The eighth air hole 335h communicates with the eighth chamber 318 and guides flow of the air into the eighth chamber 318.

The distribution plate 331 has the plurality of air grooves 331a to 331h having diameters that are greater than the diameters of the air holes and provided to correspond to the arrangement of the air holes.

In the present embodiment, for convenience of description, the plurality of air grooves 331a to 331h are individually referred as the "first air groove 331a to the eighth air groove 331h." Filter protrusions 341 of the filter member 340 are inserted into the first air groove 331a to the eighth air groove 331h, respectively.

The first air hole 335a is provided in the first air groove 331a. The first air hole 335a is an opening that vertically passes through a bottom surface of the first air groove 331a. The first air groove 331a is provided to have a diameter greater than the diameter of the first air hole 335a.

Likewise, the second air hole 335b to the eighth air hole 335h are provided in the second air groove 331b to the eighth air groove 331h, respectively.

The first air hole 335a to the eighth air hole 335h are covered by the filter member 340 inserted into the first air groove 331a to the eighth air groove 331h. The filter member 340 allows air to pass therethrough and performs filtering to prevent other foreign substances from being introduced into the air holes. The filter member 340 is provided with the plurality of filter protrusions 341 protruding from one surface thereof.

The plurality of filter protrusions 341 are provided to be inserted into the first air groove 331a to the eighth air groove 331h, respectively. The plurality of filter protrusions 341 are inserted into the first air groove 331a to the eighth air groove 331h to cover the air holes 335a to 335h, respectively.

The vial container 200 in which the solution mixed with the specimen is accommodated is inserted into the container mounting part 350. The container mounting part 350 may include a container insertion space 353, the plurality of hooks 355, the plurality of fitting protrusions 351, and a cartridge code 357.

The container insertion space 353 is a space into which the vial container 200 is inserted.

The plurality of hooks 355 are provided in the container insertion space 353 to protrude inward from the container insertion space 353. The hook 355 is inserted into the mounting groove 218 of the vial container 200 and prevents the vial container 200 from being separated from the container insertion space 353.

When the vial container 200 is inserted into the container insertion space 353, the container mounting part 350 may be provided to support a side surface of the vial container 200 while the hook 355 is caught by the mounting groove 218.

The cartridge code 375 is a portion in which a code name of the test cartridge 300 on which the test reagent 10 is tested is written.

The plurality of fitting protrusions 351 are protrusions that vertically protrude downward from the container mounting part 350. The plurality of fitting protrusions 351 are fitted into the side fitting grooves 319b of the reagent reaction unit 310. Accordingly, the container mounting part 350 is coupled to the reagent reaction unit 310. The container mounting part 350 and the reagent reaction unit 310 are coupled to be vertically stacked.

When the vial container 200 is inserted into the container insertion space 353, the container mounting part 350 supports the side surface of the vial container 200 while the hook 355 is caught by the mounting groove 218 and stably grips the vial container 200 so that the solution inside the vial container 200 flows in the direction of gravity.

When the solution flows to the chamber, the container mounting part 350 may stably grip the vial container 200 to prevent shaking of the vial container 200 so that the solution may evenly flow to the chambers 311 to 318.

A preferred embodiment of the present invention as described above is merely disclosed for illustrative purposes, those skilled in the art having general knowledge of the present invention may make various modifications, changes, and additions within the spirit and scope of the present invention, and these modifications, changes, and addition belong to the appended claims.

### [Industrial Applicability]

According to a vial container and a test cartridge including the same related to an embodiment of the present invention, when a solution stored in a vial container flows to respective chambers in which test reagents are accommodated, shaking of the vial container can be prevented, and the solution can evenly flow into the respective chambers.

## Claims

1. A vial container comprising:
a container body in which a solution is accommodated; and
a container lid detachably coupled to an upper portion of the container body and provided with a plurality of lid ventilation holes,
wherein the container body includes a solution accommodating portion in which the solution is accommodated, a punching layer configured to close a lower portion of the solution accommodating portion, a residue accommodating groove disposed to surround an edge of the punching layer, and an entry groove portion provided to face the solution accommodating portion with the punching layer interposed therebetween.

2. The vial container of claim 1, wherein the container body includes a bottom portion in which the entry groove portion is provided and which has a diameter greater than a diameter of a lower end of the solution accommodating portion, a plurality of ribs provided on an outer circumferential surface of the solution accommodating portion to be spaced apart from the bottom portion, and a mounting groove provided in a circumferential direction of the lower end of the solution accommodating portion between the plurality of ribs and the bottom portion.

3. The vial container of claim 2, wherein, in the container body, the bottom portion, the plurality of ribs, and the mounting groove are integrally formed.

4. The vial container of claim 2, wherein, in the container body, a guide groove surrounding an outer circumferential surface of the entry groove portion is provided in the bottom portion.

5. The vial container of claim 2, wherein the plurality of ribs are provided to be spaced apart from each other in a circumferential direction of the solution accommodating portion.

6. The vial container of claim 1, wherein the container lid includes an air-permeable membrane covering the plurality of lid ventilation holes on an inner surface thereof.

7. The vial container of claim 1, wherein a diameter of the solution accommodating portion decreases toward a lower end thereof.

8. The vial container of claim 1, wherein the residue accommodating groove protrudes downward from the solution accommodating portion and is stepped with respect to the punching layer.

9. A test cartridge comprising:
a vial container according to any one of claims 1 to 8;
a solution distributing unit provided with an inlet passing through a punching layer of the vial container;
a reagent reaction unit provided with a plurality of chambers in which test reagents are accommodated; and
a container mounting part that is provided with a container insertion space into which the vial container is inserted and a hook provided in the container insertion space and caught by a mounting groove of the vial container and is fitted in the test cartridge so that the inlet is positioned in the container insertion space.

10. The test cartridge of claim 9, wherein, when the vial container is inserted into the container insertion space, the container mounting part supports a side surface of the vial container while the hook is caught by the mounting groove.

11. The test cartridge of claim 7, wherein the inlet has an upper end having a sharp tip portion and has an inlet passage vertically passing through the tip portion.

12. The test cartridge of claim 11, wherein the inlet is provided with an inlet guide groove at the tip portion, and
wherein the inlet guide groove guides flow of the solution from a lower end of the vial container to the inlet passage.
